# EUROPEAN PATENT APPLICATION

(11) **EP 4 331 779 A1**
(43) Date of publication of application: **06.03.2024**
(21) Application number: 23165754.5
(22) Date of filing: 30.03.2023
(51) Int. Cl.: B25J 9/16

(54) **ENHANCED POSITIONING SYSTEMS AND METHODS THEREOF**

(30) Priority: 25.08.2022 US 202263373542 P
(71) Applicant: Advanced Theodolite Technology, Inc. dba ATT Metrology Solutions, Issaquah, WA 98027 (US)
(72) Inventor: Ingham, Edward, Somerville (US); Ihlenfeldt, Steven, Mercer Island (US); Gandara, Alfredo, Redmond (US)
(74) Representative: Morrall, Jonathan Ian McLachlan

(57) **Abstract**

Systems and methods for machine positioning are provided herein. Exemplary embodiments include systems and methods using external positional information of an object under observation to compare to a programmed position of the object under observation. The comparison may be used in different manners including, for example, course correction, future path planning, object avoidance, etc.

## Description

### BACKGROUND

Machining systems can currently control their positioning and perform actions based on positions as tracked by the machine itself. However, such systems must first be calibrated in order to operate and be configured to track its own location over time. Once calibrated, conventional systems drift over time or may become misaligned. In order to correct the machine positioning, the machine must be recalibrated.

Calibration in these situations requires that the operational processing of the machine has to stop. The machine tools are measured in some way, and the information provided to the machine. This can be done by moving the machine tip to a known or calibration position, and zeroing the machine. These calibrations require the interruption of the machine so that the calibration can occur. The calibrations may then improve positional tracking for a period of time, until the machine drifts again.

The precision of the machine is also limited by its own tracking devices. For these integrated machines, to maintain precision over time as the precision devices become less accurate or as the devices age and are no longer as precise as new precision equipment, new investment is required to replace the equipment to maintain the precision placements. However, it may be expensive to continually replace equipment that have tracking devices integrated into the machine in order to maintain precision tracking.

Examples of positional systems may be found in, for example, US Patent No. 9,557,157; US Patent No. 10,545,014; US Patent No. 11,035,659; US Patent No. 11,035,660, each of which are incorporated by reference in its entirety.

### SUMMARY

An invention is defined in the claims. Exemplary embodiments described herein may be used for a seven degree of freedom real time enhanced positioning system. Exemplary embodiments may use up to six degrees of spatial positioning. Up to three degrees of spatial positioning may be translational along three perpendicular axis in three dimensions: forward/backward-surge, up/down-heave, left/right-sway in three perpendicular axis. Up to three degrees of spatial positioning may be in orientation through rotation about the three perpendicular axis: rotation about the normal axis or up/down axis - yaw; rotation about the transverse axis or left/right axis - pitch; rotation about the longitudinal axis or forward/backward axis - roll. The last degree of freedom may be in time to permit real time assessment and correction of the position of the enhanced positioning system as described herein.

Exemplary embodiments described herein may comprise receiving information from multiple sensor, such as any combination of inertial measurement unit(s), laser tracker(s), laser scanner(s), camera(s), distance system(s), probing sensor(s), etc. and combining the information into real-time data set for predictive machine path corrections or machine placement. Exemplary embodiments include receiving precision metrology data from one, two, or more sources and combining the information for improved accuracy of location information.

Due to mechanical limitations, some machines may never have sufficient precision for desired applications. Tracking devices integrated into the machine may be used to improve precision for the application.

### DRAWINGS

FIGS. 1-5 illustrate exemplary embodiments of a system for real time positional accuracy according to the present description.
FIG. 6 illustrates an exemplary system diagram according to embodiments described herein.
FIG. 7 illustrates an exemplary method according to embodiments described herein.
FIG. 8 illustrates an exemplary architectural structure according to embodiments described herein.
FIG. 9 illustrates an exemplary architectural structure according to embodiments described herein.

### DESCRIPTION

The following detailed description illustrates by way of example, not by way of limitation, the principles of the invention. This description will clearly enable one skilled in the art to make and use the invention, and describes several embodiments, adaptations, variations, alternatives and uses of the invention, including what is presently believed to be the best mode of carrying out the invention. It should be understood that the drawings are diagrammatic and schematic representations of exemplary embodiments of the invention, and are not limiting of the present invention nor are they necessarily drawn to scale.

Exemplary embodiments described herein include systems and methods for multiple degree of freedom real time precision positioning and correction. Exemplary embodiments described herein include multiple integrated sensors for providing real time positioning that can be used within a feedback loop to provide position corrections within a system.

Exemplary embodiments of the systems and methods described herein may operate outside of the Windows (or other platform) operating system environment. Exemplary embodiments may use dedicated computing hardware and software or portions of system architecture that is separated from the operating system of the machine to provide fast processing of positioning data and loop correction information. Exemplary embodiments described herein may include real time operating system (programmable logic controller (PLC) & industrial personal computer (IPC)) based system architecture with precision metrology and inertial measurement unit (IMU) sensors data. An exemplary program controller may be Beckhoff IPC.

Exemplary embodiments of the systems and methods described herein may use a feedback loop to permit the real time positioning information to be synchronized and analysed to provide real time updated positioning information. In an exemplary embodiment, a feedback loop may provide an estimated future position of one or more objects within the system. The estimated future positions of multiple objects may be based on different times in relation to the position processing and/or sensor speeds in which an updated position of each object is provided so that an estimated position for each object within the system may be synchronized.

Exemplary embodiments described herein may provide high-speed real time precision metrology grade position correction.

Although embodiments of the invention may be described and illustrated herein in terms of a seven degrees of freedom (7DoF), it should be understood that embodiments of this invention are not so limited, but are additionally applicable to fewer degrees of positional freedom. Furthermore, although embodiments of the invention may be described and illustrated herein in terms of real time positioning, it should be understood that embodiments of the invention are also applicable to other slower positioning improvement systems and methods. For example, the time of correction may be extended and/or the sampling rates of the data for processing may be fewer or farther between for a slower processing rate. Such embodiments remain within the scope of the instant disclosure because calibration and/or position corrections may still occur while the system is being used. Exemplary embodiments described herein may be used, for example, for tracking a machine path to determine drift over time or over a path. Exemplary embodiments may then use the positional correction and offset described herein to improve path correction if the machine is intended to repeat the same or similar path.

Exemplary embodiments described herein may include systems and methods having a plurality of sensors, one or more processors, one or more memory having machine readable instructions that are configured to perform the functions described herein when executed by the one or more processors. The sensors are configured to generate sensor data. The precision metrology data is fed directly into high speed PLC processors. The data is then synchronized with the IMU data streams and fused together for positional enhancement between the two data sets. A comparison of an actual object position to a desired object position is made in real time and a kinematic correction is calculated and sent to the machine to update the object position.

Exemplary embodiments described herein include the combination of sensors combined with IMU and software for performing data analysis to synchronize and fuse data sets together for path correction analysis and implementation. Exemplary embodiments described herein may also or alternatively be used to monitor multiple objects in a single environment (cell).

Exemplary embodiments described herein may include sensors comprising laser tracker(s), photogrammetr(y/ies), inertial measurement unit(s) (IMU), among others. Exemplary embodiments comprising photogrammetry sensors may be used to observe and analyse multiple objects within an environment. Exemplary embodiments comprising IMU sensors may be used regardless of line of sight limitations within a system environment to individual devices or objects for observation.

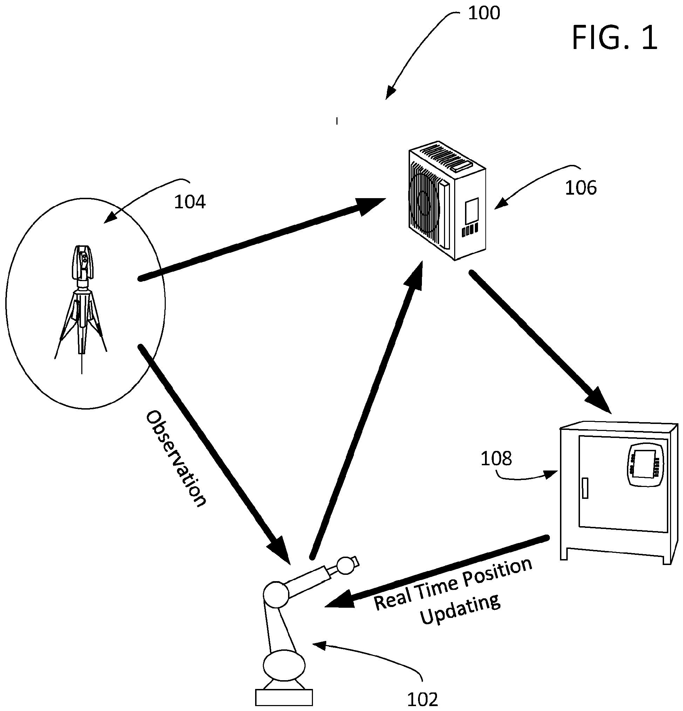

FIG. 1 illustrates an exemplary system 100 for providing real time seven degrees of freedom (7DoF) positioning accuracy for position correction. Exemplary embodiments may use positioning information from component parts already integrated into a system component. Exemplary embodiments of the system described herein may, for example, use the established capability from a machine controller, such as one from Leica, in combination with exemplary embodiments of the system components and methods described herein to provide a streamline system that permits a high rate of 7DoF feed to a desired robotic closed loop.

In an exemplary embodiment, the system described herein may include an object to be tracked 102. As illustrated, the object is a robot with an arm for provisioning positional manipulation of a tool or component part at its end. Although a robotic arm is provided as an example, the object to be tracked may be any object, including personnel, machines, parts, components, etc. In the illustrated example, the robot may provide data outputs in machine coordinates based on its own measurement system's measured position. The machine coordinates may be provided by the machine at a machine rate, such as, for example 300 Hz.

In an exemplary embodiment, the system described herein may include one or more sensors 104. A positional tracker may be provided as one or more of the system sensors. As illustrated, a laser tracker is provided for absolute positional tracking. In an exemplary embodiment, a Leica AT960 is used with a real time feature pack and Leica T-Frame. The sensors may provide positional data at a rate that is approximate to or better than (faster) than the object positional information. For example, if the robot is providing data output at 300 Hz, then the sensor information is preferably greater than 300 Hz, such as 1,000 Hz.

In an exemplary embodiment, the system 100 described herein may include one or more processors 106 configured to execute instructions from machine readable memory to perform the control functions described herein. In an exemplary embodiment, the system may be configured to receive a first data stream from the object under observation 102 and at least one second data stream from the one or more sensors 104. The first data stream may be the positional data provided by a robot. The second data stream may be the detected position of the robot by one of the sensors 104. A plurality of second data streams may be provided for receiving a data stream from each of the sensors from a plurality of sensors, if more than one sensor is used in the system.

As illustrated, the system 100 may include one or more sensors 104 (identified as laser tracker in FIG. 1) external to the object to be tracked 102. In this embodiment, the one or more sensors 104 may detect a location and/or orientation (together as the object's position) of the object to be tracked directly. In addition or alternative thereto, one or more sensors may be coupled to the object to be tracked and used to identify other objects or locations within the environment. The location and/or orientation of the object to be tracked may then be directed determined by the sensor information and/or relative to the other object or locations within the environment.

In an exemplary embodiment, the system may include an object controller. The object controller may be a controller configured to provide instructions to the object to be tracked. For example, the object controller 108 may be a controller of the robot. The object controller 108 may be integrated with the one or more processors 106 provided the analysis and positional correction as described herein. The object controller 108 may be integrated into the object to be tracked 102, such as the robot. The object controller 108 may be a separate stand alone controller configured to receive instructions from the one or more processors 106 and send signals to control the operation of the object to be tracked based on those instructions. In an exemplary embodiment, the robot positional correction information is generated by the one or more processors and sent to the controller, where the controller is configured to implement a path correction or compensation based on the robot positional correction information in order to improve the real time positional accuracy of the object to be tracked, such as the robot.

In an exemplary embodiment, the processor(s) and memory(ies) are configured to provide initial processing. Initial processing may include receiving and processing global metrology data. Metrology data may include any combination of positional information as described herein. For example, the metrology data may include positional data received from the object to be tracked (e.g. the robot self identified coordinate location), and/or the positional data received from one or more sensors, such as laser sensors providing positional information of the object under observation.

In an exemplary embodiment, the initial processing may include synchronization. The multiple metrology data streams may be received by the processor(s) and synchronized to a master clock. Exemplary embodiments may also or alternatively extrapolate information between data points within the data streams in order to synchronize data streams having different sampling rates. For example, a first data stream may have a 60 Hz sampling rate, while a second data stream may have a 120 Hz sampling rate. Data points between those of the 60 Hz sampling rate may be extrapolated from the data stream so that the two data streams may be integrated, analyzed, and/or compared as described herein with corresponding data points.

In an exemplary embodiment, the initial processing may include tie-in. The multiple metrology data streams may be received by the processor(s) and analyzed so that the data streams may be transformed to the same coordinate system. For example, a first data stream may comprise orientation information, while a second data stream may provide location information. The two data streams may be merged to provide a full location and orientation description of the object to be tracked. However, if a third data stream is used providing additional location information, the location information form the different data streams are first transferred to a universal coordinate system. The universal coordinate system may be the same as one or more of the data streams from the one or more sensors, may be an environment coordinate system, may be relative to the object to be tracked, etc. The system may therefore transform the data streams that are not in the universal coordinate system to the universal coordinate system in order to integrate, analyze, and/or compare the data streams as described herein. In an exemplary embodiment, the initial processing may include data transformation. In an exemplary embodiment, one or more of the data streams may be transformed into a common coordinate system. For example, the data may be transformed into a machine coordinate system.

Exemplary embodiments may comprise trackers positioned in an environment. The trackers may provide known locations within the environment in which the universal coordinate system may be determined. The trackers may be separate from the environment and positioned for coordinate calibration, and/or may be part of the environment such as being or included with one or more objects within the environment. The information from the trackers may be received from the one or more processors and used to transform the data streams into a universal coordinate system. For example, a data stream received in a machine position may be transformed by knowing the machine location relative to the trackers. The system may therefore take the measured location from a machine coordinate, compare to the tracker coordinate, and transform the location information to a universal coordinate system, such as an environment location.

In an exemplary embodiment, the initial processing may include data offsetting. In an exemplary embodiment, data may be offset to the point of interest on the object under observation, such as the tool center point (TCP) frame. For example, if a location of the machine is detected by the one or more sensors, the offset to the actual point of interest on the machine may be determined by knowing the relative position of the point of interest to the point measured by the sensor. Exemplary embodiments may therefore track locations of a portion of the object under observation if the point of interest is not observable by the sensor and still provide improved location information or confirmation location information about the point of interest.

In an exemplary embodiment, the initial processing may include error analysis. Exemplary embodiments may include error checking, data transmission monitoring, etc. in order to reduce errors within the system.

In an exemplary embodiment, the processor(s) and memory(ies) are configured to provide positional processing. Positional processing may include receiving and processing the metrology data and/or the initially processed data in order to provide the positional accuracies and/or updates as described herein. Any of the exemplary embodiments described herein may include analysis and/or processing within the pre-processing stage of analyzing the data and/or within the processing stage of analyzing the data. The steps are not necessarily separate or require a specific order. For example, synchronization of data may occur at the pre-processing stage and/or at the processing stage of the data analysis. The pre-processing and processing steps may occur at different parts of the system, or may be performed at the same processor(s).

In an exemplary embodiment, the positional processing comprises receiving and synchronizing the positional data from the object to be tracked to the master controller. For example, as illustrated, the robot 102 may provide information about its position to the system 100, such as the processor 106. The positional data from the object may be the location in which the machine is intended to be, but which may be imprecise or not accurate because of machine drift during use. The positional data from the object may therefore not be the actual position of the object to be tracked. The positional data from the object to be tracked may be the position of the object based on the information from or to the object for controlling its position without the benefit of the system and methods described herein. In other words, it may be the positional information as the machine intends the location to be, regardless of the actual physical position of the object.

In an exemplary embodiment, the positional processing comprises comparing the positional data from the object 102 with the positional data as determined by the one or more sensors 104. Exemplary embodiments may therefore compare the position in which the object to be tracked 102 (such as the robot position) is intended to be based on the information from the robot itself and the actual, real world position of the robot that can include variations or deviations from the intended position (such as through machine drift). A deviation between the actual and intended position of the object to be tracked is therefore determined. In an exemplary embodiment, the deviation may be across seven degrees of freedom (7DoF).

In an exemplary embodiment, the positional processing comprises validation. The correction values may be validated based on set correction tolerances.

In an exemplary embodiment, the positional processing comprises determining a projected deviation for synchronization and real time correction to adjust a current position of the object under observation in real time. In an exemplary embodiment, the one or more data streams may be construction from different data rates with different latencies. Exemplary embodiments may therefore create positional predictions in order to provide current instructions that can be executed and implemented to account for the latency from the positional calculation and correction of the positional implementation by the machine in time.

In an exemplary embodiment, the positional instructions may be sent to the robot controller 108 to be implemented in a closed loop to provide real time positional compensation.

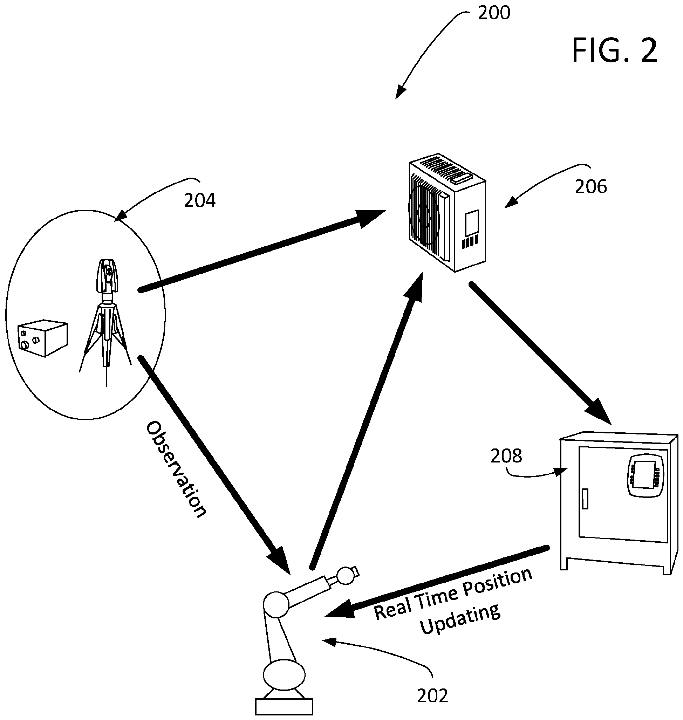

FIG. 2 illustrates an exemplary system 200 for real time seven degrees of freedom (7DoF) positioning accuracy with data synchronization and fusion. Exemplary embodiments of the system described herein may fuse data used to take the high accuracy/rate of positional data as described, for example with respect to FIG. 1, with a high accuracy/rate of rotation or other positional data, such as provided by an inertial measurement unit(s) (IMU(s)) to produce a 7DoF data stream. Exemplary embodiments may use the rotational data stream in conjunction with the positional data stream of the machine because the rotational data stream may not degrade or drift over distance.

The system of FIG. 2 may use any combination of the system components and algorithms as described with respect to FIG. 1.

In an exemplary embodiment, the system described herein may include an object to be tracked 202. As illustrated the object is a robot with an arm for provisioning positional manipulation of a tool or component part at its end. The robot may provide data outputs in machine coordinates based on its current measured position. The machine coordinates may be provided by the machine at a machine rate, such as, for example 300 Hz.

In an exemplary embodiment, the system described herein may include one or more sensors 204. As illustrated, a positional tracker may be provided as one or more of the system sensors. As illustrated a laser tracker is provided for absolute positional tracking. In an exemplary embodiment, a Leica AT960 is used with a real time feature pack, but other trackers may be used. In the example system illustrated in FIG. 2, the system also includes one or more IMUs. Other trackers (not just laser trackers) may also be used in combination or instead of the described laser tracker Leica, for example, OptiTrack high-speed photogrammetry and/or Emcore IMU. That may provide positional data. In an exemplary embodiment, the robot is providing data output at 300 Hz, while the sensors are providing an output at approximately 200 Hz.

In an exemplary embodiment, the system described herein may include one or more processors 206 configured to execute instructions from machine readable memory to perform the control functions described herein. In an exemplary embodiment, the system may be configured to receive a first data stream from the object under observation and at least one second data stream from the one or more sensors. The first data stream may be the positional data provided by a robot. The second data stream may be the detected position of the robot by one of the sensors. A plurality of second data streams may be provided for receiving a data stream from each of the sensors from a plurality of sensors, if more than one sensor is used in the system. In the configuration illustrated in FIG. 2, a plurality of second data streams are provided including the data stream from at least the data tracker and the one or more data streams from the IMU. In an exemplary embodiment, the IMU may provide three degrees of rotational freedom positional information in one or more data streams.

In an exemplary embodiment, the system may include an object controller 208. The object controller may be a controller configured to provide instructions to the object under observation. For example, the object controller may be a controller of the robot. The object controller may be integrated with the one or more processors provided the analysis and positional correction as described herein. The object controller may be integrated into the object under observation, such as the robot. The object controller may be a separate stand alone controller configured to receive instructions from the one or more processors and send signals to control the operation of the object under observation based on those instructions. In an exemplary embodiment, the robot positional correction information is generated by the one or more processors and sent to the controller, where the controller is configured to implement a path correction or compensation based on the robot positional correction information in order to improve the real time positional accuracy of the object under observation, such as the robot.

In an exemplary embodiment, the processor(s) and memory(ies) are configured to provide initial processing. Initial processing may include receiving and processing global metrology data. Metrology data may include any combination of positional information as described herein. For example, the metrology data may include positional data received from the object under observation (e.g. the robot self identified coordinate location), and/or the positional data received from one or more sensors, such as laser sensors providing positional information of the object under observation and/or the IMU(s).

In an exemplary embodiment, the initial processing may include synchronization. The multiple metrology data streams may be received by the processor(s) and synchronized to a master clock.

In an exemplary embodiment, the initial processing may include tie-in. Exemplary embodiments of the initial processing comprising tie-in may be as described with respect to FIG. 1 in which metrology equipment and/or sensor(s) generating data streams one or more different coordinate systems into a universal coordinate system. In an exemplary embodiment, the initial processing may include data transformation. In an exemplary embodiment, one or more of the data streams may be transformed into a common coordinate system. For example, the data may be transformed into a machine coordinate system or an environment coordinate system.

In an exemplary embodiment, the initial processing may include data offsetting. In an exemplary embodiment, an IMU offset from NED (North-East-Down) to TCP may be calculated and applied.

In an exemplary embodiment, the initial processing may include fusing data streams. For example, the data received from the one or more sensors may provide information on one or more different positional degrees of freedom. The information from the multiple sensors may therefore be synchronized and integrated to fuse the data to generate a single multiple degree of freedom determined position. For example, a laser sensor may provide three translational or coordinate degrees of freedom (location) while an inertial measurement unit (IMU) may provide three rotational degrees of freedom (orientation). The data streams from the laser sensor and the IMU may be fused in order to generate a six degree of freedom position, and a seventh degree of freedom in time. In an exemplary embodiment translational data and angular data may be fused using Kalman Filtering to produce a 7DoF frame. Although Kalman Filtering is described herein, other data fusion techniques may also be used. The sensor(s) may include overlapping data on one or more degrees of freedom. For example, the IMU may also provide translational or coordinate degrees of freedom (location) in addition to the rotational degrees of freedom. In this case, the translational degrees of freedom information may be integrated.

In an exemplary embodiment, the initial processing may include error analysis. Exemplary embodiments may include error checking, data transmission monitoring, etc. in order to reduce errors within the system.

In an exemplary embodiment, the processor(s) and memory(ies) are configured to provide positional processing. Positional processing may include receiving and processing the metrology data and/or the initially processed data in order to provide the positional accuracies and/or updates as described herein.

In an exemplary embodiment, the positional processing comprises receiving and synchronizing the positional data from the object under observation to the master close. For example, as illustrated the robot may provide information about its position to the system. The positional data from the object may be the location in which the machine is intended to be, but which may be imprecise or not accurate because of machine drift during use. The positional data from the object may therefore not be the actual position of the object under observation. The positional data from the object may the be position of the object based on the information from or to the object for controlling its position without the benefit of the system and methods described herein. In other words, it may be the positional information as the machine intends the location to be, regardless of actual location of the object.

In an exemplary embodiment, the positional processing comprises comparing the positional data from the object with the positional data as determined by the one or more sensors. Exemplary embodiments may therefore compare the position in which the object under observation (such as the robot position) is intended to be based on the information from the robot itself and the actual, real world position of the robot that can include variations or deviations from the intended position (such as through machine drift). A deviation between the actual and intended position of the object under observation is therefore determined. In an exemplary embodiment, the deviation may be across seven degrees of freedom (7DoF).

In an exemplary embodiment, the positional processing comprises validation. The correction values may be validated based on set correction tolerances.

In an exemplary embodiment, the positional processing comprises determining a projected deviation for synchronization and real time correction to adjust a current position of the object under observation in real time. In an exemplary embodiment, the one or more data streams may be constructed from different data rates with different latencies. Exemplary embodiments may therefore create positional predictions in order to provide current instructions that can be executed and implemented to account for the latency from the positional calculation and correction of the positional implementation in time.

In an exemplary embodiment, positional predictions may include providing an offset over time and/or an offset based on position. Exemplary embodiments may therefore be used when a machine repeats the same intended path and/or is used over the same duration of time. In these instances, exemplary embodiments may be used to monitor the actual path compared to the machine path to determine a drift over time and/or drift in relation to a specific direction and/or path. When the intended path is repeated for redundant tasks, the machine may be corrected using the positional predictions from prior use and monitoring.

In an exemplary embodiment, the positional instructions may be sent to the robot controller to be implemented in a closed loop to provide positional compensation. The positional compensation may be made in real time or in sequential loops for use of the machine.

In an exemplary embodiment, the pre-processing and/or processing of data streams may comprise any combination of synchronizing the data streams so that data is provided in a single time frame, transforming the data so that the data is provided in a single coordinate system, determining a correction of the machine from its actual position as determined from the data streams from the one or more sensors, and/or projecting the data so that location correct may be provided when the correction can occur at the machine itself.

In an exemplary embodiment, determining the correction may include comparing the actual position of the object to be tracked form the integrated data streams from the one or more sensors and the machine position based on a machine positional data stream providing the machine position as recognized by itself and/or the controller providing machine positional instructions. The comparison may be in determining an offset from the machine position and the actual position.

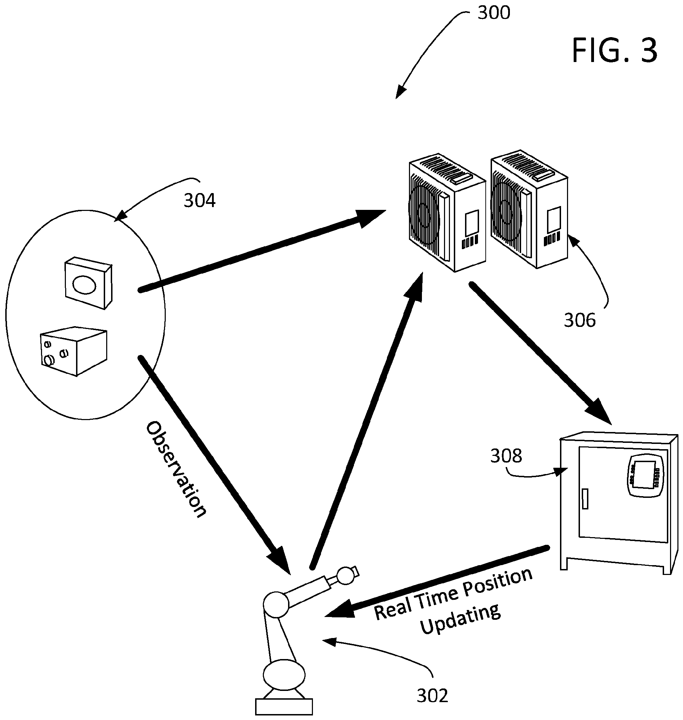

FIG. 3 illustrates an exemplary system for real time seven degrees of freedom (7DoF) positioning accuracy for multiple object motion detection and/or tracking. Exemplary embodiments of the system described herein may include photogrammetry cameras in combination with the high accuracy/rate of positional data as described, for example, with respect to FIG. 1. Exemplary embodiments of the systems and methods described herein, the system may improve positional accuracy, may improve positional knowledge with limited or obstructed line of sight, may improve multiple object positioning and/or motion tracking, and/or improve relative positional tracking of multiple objects.

The system of FIG. 3 may use any combination of the system components and algorithms as described with respect to FIGS. 1 and/or 2.

In an exemplary embodiment, the system 300 described herein may include an object to be tracked 302. As illustrated the object is a robot with an arm for provisioning positional manipulation of a tool or component part at its end. The robot may provide data outputs in machine coordinates based on its current measured position. The machine coordinates may be provided by the machine at a machine rate, such as, for example 300 Hz.

In an exemplary embodiment, the system 300 described herein may include one or more sensors 304. As illustrated, a positional tracker may be provided as one or more of the system sensors. As illustrated a high speed photogrammetry camera is provided for providing sequential images (frames) of an area under observation that can include the object under observation. Exemplary embodiments described herein may include sensors include one or more IMU(s). For example, the tracker may be a combination of the OptiTrack high-speed photogrammetry and/or Emcore IMU. The sensors may provide positional data at a rate, such as, of approximately 120 Hz. As described herein, the sensors have approximate rates, which are exemplary only. Other data rates are within the scope of the instant disclosure.

In an exemplary embodiment, the system 300 described herein may include one or more processors 306 configured to execute instructions from machine readable memory to perform the control functions described herein. In an exemplary embodiment, the system may be configured to receive a first data stream from the object under observation and at least one second data stream from the one or more sensors. The first data stream may be the positional data provided by a robot. The second data stream may be the detected position of the robot by one of the sensors. A plurality of second data streams may be provided for receiving a data stream from each of the sensors from a plurality of sensors, if more than one sensor is used in the system. As illustrated, a plurality of second data streams are provided including a data stream from the camera and at least one data stream from the IMU.

In an exemplary embodiment, the system 300 may include an object controller 308. The object controller may be a controller configured to provide instructions to the object under observation. For example, the object controller may be a controller of the robot. The object controller may be integrated with the one or more processors provided the analysis and positional correction as described herein. The object controller may be integrated into the object under observation, such as the robot. The object controller may be a separate stand alone controller configured to receive instructions from the one or more processors and send signals to control the operation of the object under observation based on those instructions. In an exemplary embodiment, the robot positional correction information is generated by the one or more processors and sent to the controller, where the controller is configured to implement a path correction or compensation based on the robot positional correction information in order to improve the real time positional accuracy of the object under observation, such as the robot.

In an exemplary embodiment, the processor(s) and memory(ies) are configured to provide initial processing. Initial processing may include receiving and processing global metrology data. Metrology data may include any combination of positional information as described herein. For example, the metrology data may include positional data receives from the object under observation (e.g. the robot self identified coordinate location), and/or the positional data received from one or more sensors, such as camera providing positional information of the object under observation.

In an exemplary embodiment, the initial processing may comprise object recognition and/or positional identification from the images captured by the camera. For example, positional information may be obtained by determining an object point position by recognizing a features within an image frame from the camera data stream. The camera data may therefore be transformed into machine coordinate system.

In an exemplary embodiment, the initial processing may include synchronization. The multiple metrology data streams may be received by the processor(s) and synchronized to a master clock.

In an exemplary embodiment, the initial processing may include data transformation. In an exemplary embodiment, one or more of the data streams may be transformed into a common coordinate system. For example, the data may be transformed into a machine coordinate system.

In an exemplary embodiment, the initial processing may include data offsetting. In an exemplary embodiment, an IMU offset from NED to TCP may be calculated and applied.

In an exemplary embodiment, the initial processing may include error analysis. Exemplary embodiments may include error checking, data transmission monitoring, etc. in order to reduce errors within the system.

In an exemplary embodiment, the initial processing may include fusing data streams. For example, the data received from the one or more sensors may provide information on one or more different positional degrees of freedom. The information from the multiple sensors may therefore be synchronized and integrated to fuse the data to generate a single multiple degree of freedom determined position. For example, images from the camera may be analysed to generate three translational or coordinate degrees of freedom while an IMU may provide three rotational degrees of freedom. The data streams generated from the camera data stream and the data stream(s) from the IMU may be fused in order to generate a six degree of freedom position, and a seventh degree of freedom in time. In an exemplary embodiment translational data and angular data may be fused using Kalman Filtering to produce a 7DoF frame. Although Kalman Filtering is described herein, other data fusion techniques may also be used.

In an exemplary embodiment, the processor(s) and memory(ies) are configured to provide positional processing. Positional processing may include receiving and processing the metrology data and/or the initially processed data in order to provide the positional accuracies and/or updates as described herein.

In an exemplary embodiment, the positional processing comprises receiving and synchronizing the positional data from the object under observation to the master close. For example, as illustrated the robot may provide information about its position to the system. The positional data from the object may be the location in which the machine is intended to be, but which may be imprecise or not accurate because of machine drift during use. The positional data from the object may therefore not be the actual position of the object under observation. The positional data from the object may be position of the object based on the information from or to the object for controlling its position without the benefit of the system and methods described herein. In other words, it may be the positional information as the machine intends the location to be, regardless of actual location of the object.

In an exemplary embodiment, the positional processing comprises comparing the positional data from the object with the positional data as determined by the one or more sensors. Exemplary embodiments may therefore compare the position in which the object under observation (such as the robot position) is intended to be based on the information from the robot itself and the actual, real world position of the robot that can include variations or deviations from the intended position (such as through machine drift). A deviation between the actual and intended position of the object under observation is therefore determined. In an exemplary embodiment, the deviation may be across seven degrees of freedom (7DoF).

In an exemplary embodiment, the positional processing comprises validation. The correction values may be validated based on set correction tolerances.

In an exemplary embodiment, the positional processing comprises determining a projected deviation for synchronization and real time correction to adjust a current position of the object under observation in real time. In an exemplary embodiment, the one or more data streams may be construction from different data rates with different latencies. Exemplary embodiments may therefore create positional predictions in order to provide current instructions that can be executed and implemented to account for the latency from the positional calculation and correction of the positional implementation in time.

In an exemplary embodiment, the positional instructions may be sent to the robot controller to be implemented in a closed loop to provide real time positional compensation.

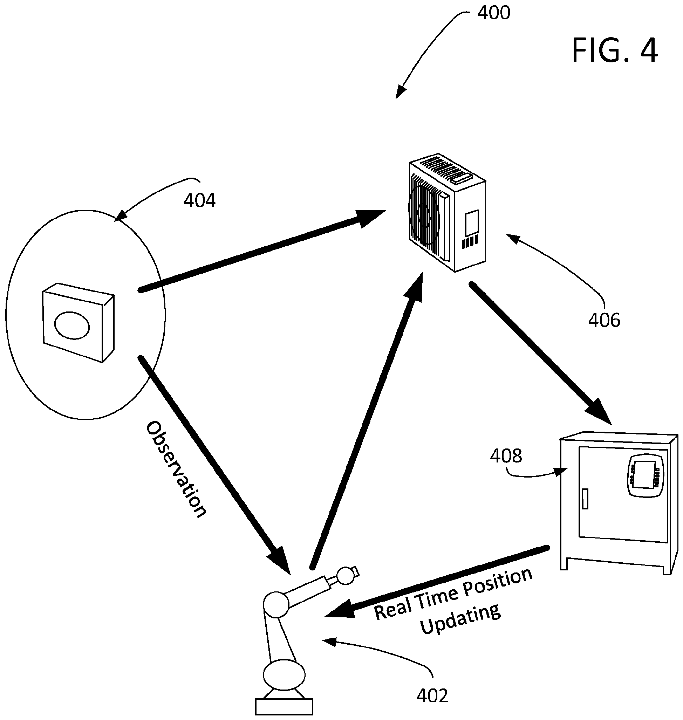

FIG. 4 illustrates an exemplary system for real time seven degrees of freedom (7DoF) positioning accuracy for multiple object motion detection and/or tracking. Exemplary embodiments of the system described herein may include photogrammetry cameras for generating positional data as described, for example, with respect to FIG. 3. Exemplary embodiments of the systems and methods described herein, the system may improve positional accuracy, may improve positional knowledge with limited or obstructed line of sight, may improve multiple object positioning and/or motion tracking, and/or improve relative positional tracking of multiple objects.

The system of FIG. 4 may use any combination of the system components and algorithms as described with respect to any combination of FIGS. 1-3.

Exemplary embodiments of the system 400 illustrated in FIG. 4 may include similar system components as those of FIGS. 1-3 including an object to be tracked 402, a processor 406, and a controller 408. These component parts will not be described in complete detail here, but may have the same or similar features as described in the other embodiments presented herein.

In an exemplary embodiment, the system 400 described herein may include one or more sensors 404. As illustrated, the sensor comprises a camera. The sensors may provide positional data at a rate of approximately 120Hz.

In an exemplary embodiment, the system 400 described herein may include one or more processors configured to execute instructions from machine readable memory to perform the control functions described herein. In an exemplary embodiment, the system 400 may be configured to receive a first data stream from the object under observation 402 and at least one second data stream from the one or more sensors 404. The first data stream may be the positional data provided by a robot. The second data stream may be the detected position of the robot by one of the sensors.

In an exemplary embodiment, the processor(s) and memory(ies) are configured to provide initial processing. Initial processing may include receiving and processing global metrology data. Metrology data may include any combination of positional information as described herein. For example, the metrology data may include positional data receives from the object under observation (e.g. the robot self identified coordinate location), and/or the positional data received from one or more sensors, such as a camera providing positional information of the object under observation.

In an exemplary embodiment, the initial processing may comprise object recognition and/or positional identification from the images captured by the camera. For example, positional information may be obtained by determining an object point position by recognizing a features within an image frame from the camera data stream. The camera data may therefore be transformed into machine coordinate system. In an exemplary embodiment, the object recognition within the data stream from the camera may comprise generating seven degrees of freedom including positional and rotational degrees of freedom through object recognition, placement, and orientation. The object may include markers to assist in object detection and/or orientation analysis. The markers may comprise any identifier that can be analysed and recognized by the system, such as colors, shapes, etc. The markers may comprise known positions, orientations, sizes, etc. so that the location and orientation of the object under observation can be determined from the images from the camera data stream. Other images recognition features may also or alternatively be used such as in object detection.

In an exemplary embodiment, the initial processing may include synchronization. The multiple metrology data streams may be received by the processor(s) and synchronized to a master clock.

In an exemplary embodiment, the initial processing may include data transformation. In an exemplary embodiment, one or more of the data streams may be transformed into a common coordinate system. For example, the data may be transformed into a machine coordinate system.

In an exemplary embodiment, the initial processing may include data offsetting. In an exemplary embodiment, the camera 7DoF rigged body is offset to the TCP frame.

In an exemplary embodiment, the initial processing may include error analysis. Exemplary embodiments may include error checking, data transmission monitoring, etc. in order to reduce errors within the system.

In an exemplary embodiment, the initial processing may include fusing data streams. For example, the data received from the one or more sensors may provide information on one or more different positional degrees of freedom. The information from the multiple sensors may therefore be synchronized and integrated to fuse the data to generate a single multiple degree of freedom determined position. For example, images from the camera may be analysed to generate three translational or coordinate degrees of freedom while an IMU may provide three rotational degrees of freedom. The data streams generated from the camera data stream and the data stream(s) from the IMU may be fused in order to generate a six degree of freedom position, and a seventh degree of freedom in time. In an exemplary embodiment translational data and angular data may be fused using Kalman Filtering to produce an optimal 7DoF frame. Although Kalman Filtering is described herein, other data fusion techniques may also be used.

In an exemplary embodiment, the processor(s) and memory(ies) are configured to provide positional processing. Positional processing may include receiving and processing the metrology data and/or the initially processed data in order to provide the positional accuracies and/or updates as described herein. The positional processing may comprise any processing algorithms as described herein. In an exemplary embodiment, the various data streams are synchronized to a master close, the object under observation location data is compared against the actual positional data as determined by the analysis of one or more data streams received from the sensor(s), correction values are validated based on tolerances, and a closed loop prediction update is provided to correct the deviation.

In an exemplary embodiment, the positional processing may also include timing the closed loop update to the latency of the machine. This positional processing may be used in any combination of exemplary embodiments as describe herein, including, for example, FIGS. 1-3. Exemplary embodiments described herein may include estimating an anticipated position of the object under observation. Exemplary embodiments described herein may also include estimating an offset for the object under observation at the anticipated position and anticipated time of the correction. Exemplary embodiments of the anticipated timing correction may be used in order to provide an offset to correct the machine position that is anticipated at the time the machine executes the offset instruction. This may also or alternatively include altering the data rate in order to match the transition rate of the machine instructions to the object under observation.

In an exemplary embodiment, the positional instructions may be sent to the robot controller to be implemented in a closed loop to provide real time positional compensation.

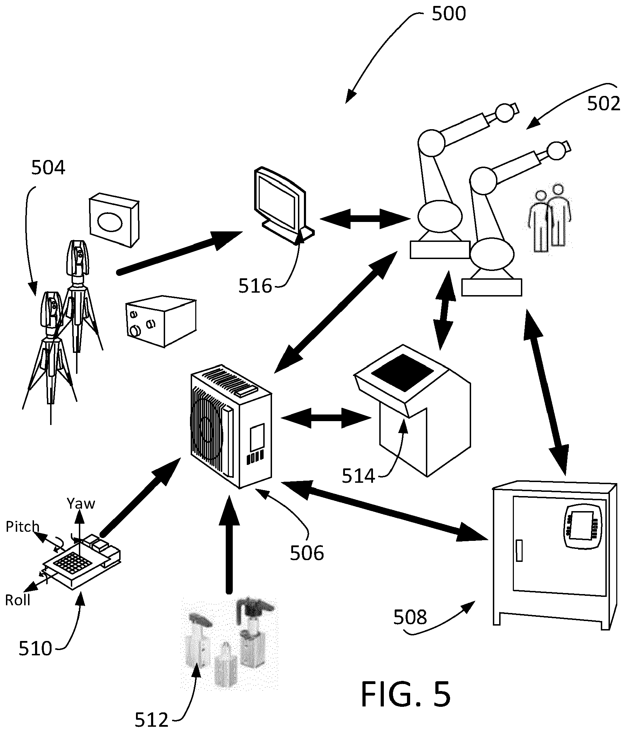

FIG. 5 illustrates an exemplary system 500 according to embodiments described herein including multiple system components including sensors 504, objects under observation 502, computers 516, processors 506, memory, and controllers 508. The system of FIG. 5 may use any combination of system components, algorithms, and functions as described herein. As illustrated, system components may be duplicated so that multiple objects 502 may be tracked through the use of one or more sensors 504 for observing the objects. Exemplary embodiments of the trackers described herein may include any combination of laser trackers, cameras, IMUs, etc. For example, the system may include Leica AT 960 and Leica T-Frame, OptiTrack high-speed photogrammetry and/or Emcore IMU. A first group of one or more sensors may be used to track of first group of one or more objects, while a second group of one or more sensors may be used to track a second group of one or more objects. The first group of one or more sensors may be the same as or different from the second group of one or more sensors. The grouping of sensors may overlap, so that some sensors are in both groups of sensors, while others are individual to a given group of sensors. Components as described herein may therefore be added, duplicated, integrated, separated, or otherwise combined and remain within the scope of the instant disclosure.

Exemplary embodiments described herein separate algorithm and processing steps for examples. However, the processing steps do not necessarily have to occur in any order or in any combination of steps. For example, steps from the initial processing algorithm may be done later and/or in combination with the positional processing algorithms. The separation is provided as exemplary only for clarity and does not require separate processing algorithms, calls, logical segments, etc. Instead, these may be combined, separated, duplicated, repeated, or otherwise recombined and remain within the scope of the present disclosure.

Exemplary embodiments described herein may not require stability of the system components to obtain metrology grade measurements or observations for system positional corrections. For example, the system components, including the sensors (such as the cameras) may drift as the objects under observation may also drift. Exemplary embodiments described herein may account for system drift in order to still provide precision positioning information and correction.

Exemplary embodiments described herein may combine different sensors together for creating improved data sets. The combination of sensors may be performed in different ways.

For example, two different sensors may be monitoring an object and their information combined to increase accuracy of the position and/or orientation of the object under observation and/or the inclusion of the two data sets may provide more positional and/or orientation information about the object. As a specific representative embodiment, an inertial measurement unit 510 may be positioned on an object under observation 502 and a laser tracker 504 may be configured to track a distance to the object under observation. The fusion of the two data sets may get the orientation, including the yaw, pitch, and roll from the inertial measurement unit, and the position, including the Cartesian (or some other system) coordinate location (x,y,z) to obtain complete location information of the object under observation.

As another example, one sensor may be positioned on another sensor to provide information about the sensor itself as it then provides information about an object under observation. For example, an inertial measurement unit 510 may be positioned on a laser tracker 514. The laser tracker may be configured to track and provide location of an object under observation 502 (otherwise described herein as the object to be tracked). By using the sensor on another sensor, additional placement information can be obtained. For example, the use of a sensor on a detecting sensor for monitoring an object permits the location of the detecting sensor to be known and updated based on information received from the sensor. Therefore, the accuracy of the information detected from the detecting sensor is improved as its own location is known to a more precise degree. In addition, exemplary embodiments may be used to reduce feedback time as the sensor can be used to predict a change to the detecting sensor and thereby update its positioning information faster than by tracking movement of the detecting sensor by itself.

In an exemplary embodiment, a first sensor may be positioned on another sensor configured to monitor the object under observation. The sensor on another sensor may be used for maintenance, extrinsic calibration, predictive location, faster processing, or combinations thereof. To enhance the maintenance of the sensor extrinsic calibration within the array, an adaption of an angular sensor may be placed on the dimensional metrology device.

For example, an inertial measurement unit may be positioned on a laser tracker. To remove the sensors positional drift, the adaptation of an inertial measurement unit can dynamically correct the extrinsic calibration of the sensor used to observe the object to ensure the relationship between the machine frame and sensor arrays is maintained to reduce unneeded noise in the data produced. Therefore, the 7DoF output produced by the sensor is highly improved and may be maintained over time. Furthermore, the correction of the extrinsic calibration can be performed dynamically without interruption to a machine operation.

In another example, an inertial measurement unit may be positioned on a Photogrammetry Camera. To remove the sensors positional drift, the adaptation of an inertial measurement unit can dynamically correct the extrinsic calibration of the sensor used to observe the object to ensure the relationship between the machine frame and sensor arrays is maintained to reduce unneeded noise in the data produced. Therefore, the 7DoF output produced by the sensor array is highly improved/maintained over time. Furthermore, the correction of the extrinsic calibration can be performed dynamically without interruption to a machine operation.

As described herein, an exemplary embodiment comprises generating predictive positional information regarding an object. The predictive positional information may be used in different ways within the exemplary embodiments described herein. For example, the predictive positional information may be used to provide machine instructions to operate the object and correct a position of the object in real time so that the correction occurs with or is synchronized to the actual implementation of the instruction to control the machine. Predictive positional information may be used for faster analysis of the positional information. For example, if a position is already anticipated, then the system may be used to correct the prediction or work off of the prediction instead of determining a position based on the data streams alone. Starting from a predictive position may improve processing speeds. Predictive positional information may be used for error correction or validation of the determined positional corrections. Predictive positional information may be used to improve the positional information received from one or more sensors such as by predicting the position of the sensor itself.

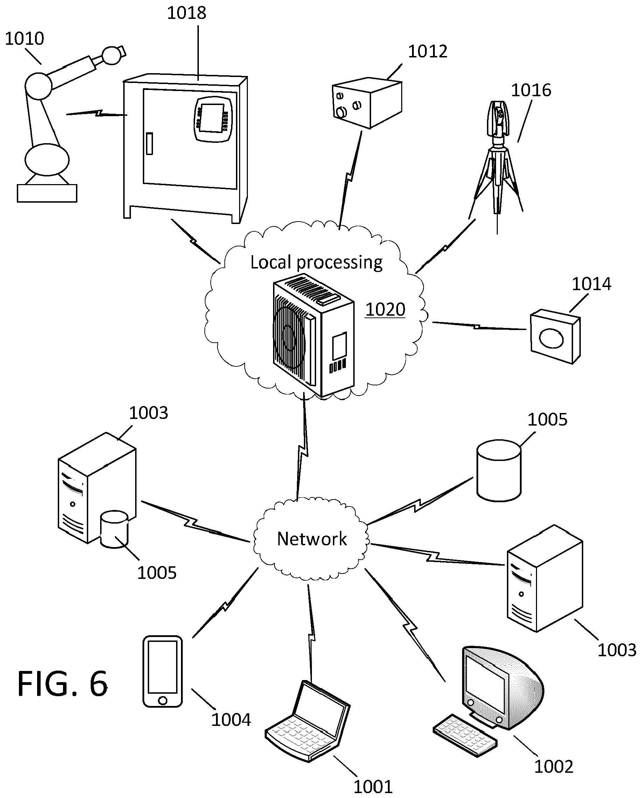

FIG. 6 illustrates an exemplary system diagram according to embodiments described herein. The system may include different combination of computing devices such as mobile devices, 1004, laptops 1001, computers 1002, severs 1003, programmable logic controller 1020, processors, industrial personal computer, etc. The system may include different combinations of sensors, such as, for example, cameras 1014, videos, laser trackers 1016, inertial measurement units 1012, etc. The one or more sensors may be configured to communicate with a local processing unit 1020 as described herein. Exemplary embodiments may perform pre-processing at the individual sensors 1012, 1014, 1016, etc. and/or at the local processor 1020. In an exemplary embodiment, the one or more sensors may be in communication with one or more remote electronic devices 1004, 1003, 1002, 1001, etc. that may be used to assist in analyzing the data, storing data, controlling and/or sending instructions one or more sensors 1012, 1014, 1016, observing an environment having the one or more sensors, and/or a device controller 1018 and/or machine 1010. The positional processing as described herein may occur at the local processing 1020 and/or at remote electronic devices 1004, 1003, 1002, 1001. The system may also be in communication with one or more databases or memory locations 1005 (or as contained in one or more electronic devices 1001, 1002, 1003, 1004, 1020. After positional processing, the positional control information may be provided to a machine controller 1018 to provide positioning instructions to the machine 1010 and/or may provide positional instructions directly to the machine 1010.

In an exemplary embodiment, the processor(s) and memory(ies) are configured to provide positional processing. Positional processing may include receiving and processing the metrology data and/or the initially processed data in order to provide the positional accuracies and/or updates as described herein. Exemplary embodiments described herein may include analysis and/or processing within the pre-processing stage of analyzing the data and/or within the processing stage of analyzing the data. The steps are not necessarily separate or require a specific order. For example, synchronization of data may occur at the preprocessing stage and/or at the processing stage of the data analysis. The preprocessing and processing steps may occur at different parts of the system as described herein, or may be performed at the same processor(s). For example, some preprocessing may occur at the sensors and/or one or more local processors. Processing may occur at one or more local processors (either the same or different from those of for preprocessing), and/or at remote electronic device, at the machine controller, or other combination described herein.

The processor(s) and memory(ies) may be configured to provide processing of the data streams received from the one or more sensors. Initial processing may include receiving and processing global metrology data. Metrology data may include any combination of positional information as described herein. For example, the metrology data may include positional data received from the object to be tracked (e.g. the robot self identified coordinate location), and/or the positional data received from one or more sensors, such as laser sensors providing positional information of the object under observation. The processors described herein may be configured through the use of machine readable instructions stored in memory and executed by the processors in order to perform the analysis of the metrology data described herein and provide positional corrections as described herein. Positional correction may also or alternatively include machine or obstacle avoidance.

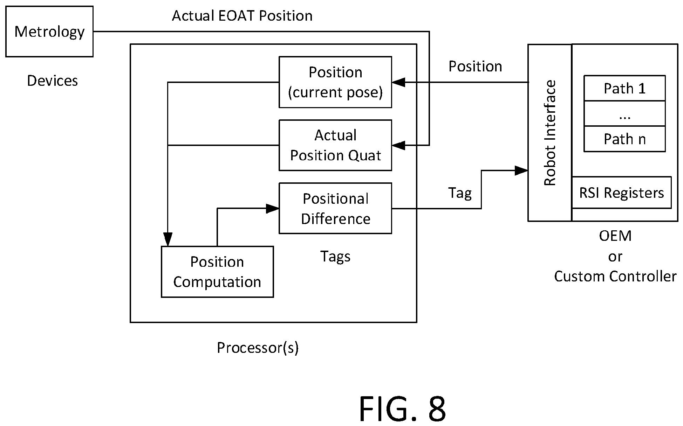

FIG. 8 illustrates an exemplary architectural structure according to embodiments described herein. The metrology data illustrated from FIG. 8 may be from the one or more sensors described herein, such as sensors 1012, 1014, or 1016 of FIG. 6. The positional computation and/or receipt of the positional data may be performed, for example, by local processor 1020 as described herein. The robotic interface may be the object under observation directly, such as object 1010 or a controller thereto, such as controller 1018.

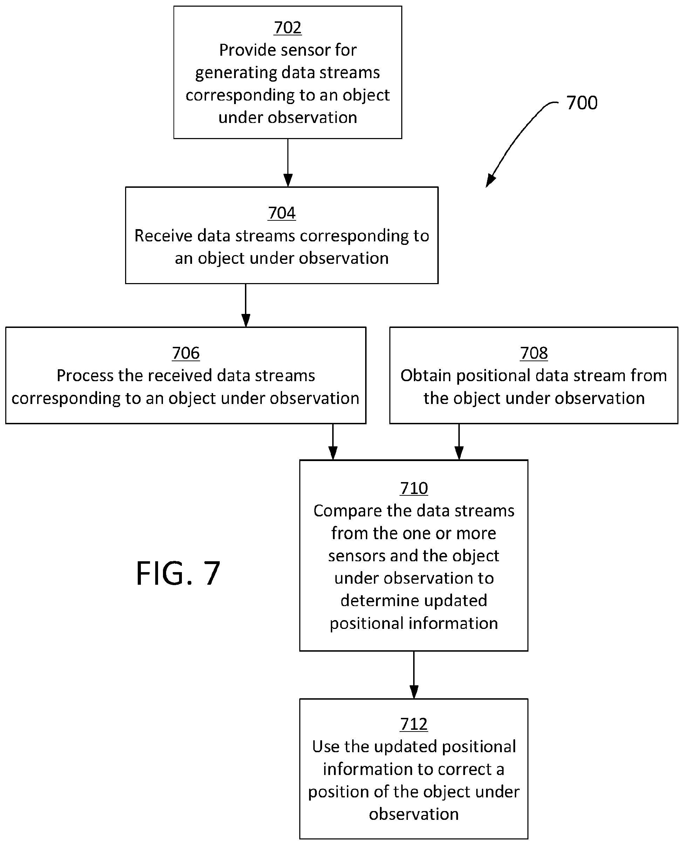

FIG. 7 illustrates an exemplary method 700 of positional correction according to embodiments described herein.

At step 702, the method according to embodiments described herein may include providing an object under observation and sensors for generating data streams. The sensors may be configured to provide information about the object under observation.

Exemplary methods may include providing one or more sensors for observing an object under observation (otherwise described herein as an object to be tracked). Exemplary embodiments described herein may include providing a plurality of sensors, one or more processors, one or more memory having machine readable instructions that are configured to perform the functions described herein when executed by the one or more processors. The sensors may be configured to generate sensor data. The sensor data may be precision metrology data.

At step 704, the sensors may be used to generate data streams, and the data may be communicated from the sensors to the one or more processors. In an exemplary embodiment, the one or more sensors may be used to generate a data stream from each of the one or more sensors. The data streams may correspond to an object under observation. The data streams may provide positional information about the object under observation. The data streams may provide information about another sensor where the combination may provide positional information about the object under observation.

At step 706, the method may include processing the received data streams corresponding to the object under observation. The processing may include any combination of processing as described herein.

In an exemplary embodiment, the method may include integrating the data streams of the one or more sensors. Integration of the data streams from one or more sensors may generate a single integrated data stream. The integration of the data streams from the one or more sensors may comprise synchronizing the data streams from the one or more data streams to a master time. The integration of the data streams from the one or more sensors may comprise transforming the data streams to a universal coordinate system. The integration of the data streams may comprise extrapolating data points within one or more of the data streams. The integration of the data streams may comprise filtering the data streams. In an exemplary embodiment, integrating data streams may use Kalman Filtering to produce an integrated data stream. Integration may include additional or alternative methods of integrating the data. For example, statistical theories for estimations of data sets over time may be used. The methods may account for inaccuracies, statistical noise, etc. to produce estimates of unknown variables. Exemplary embodiments may use multiple measurements to provide a probability distribution over the variables for one or more timeframes.

At step 708, the method may include providing an object under observation and receiving information from the object under observation. In an exemplary embodiment, the method may include obtaining positional data from the object under observation. The positional data from the object under observation may be from the controller or the object itself. The positional data from the object may be based on the positional instructions in which the object believes its position to be. The positional data from the object may be from one or more sensors used to control the position of the object.

Exemplary embodiments described herein include providing the precision metrology data directly into high speed PLC processor(s). The data is then synchronized with the integrated data stream from the one or more sensors. A comparison of an actual object position based on the processing from the one or more sensors is compared to a desired object position that is based on the position generated by the object itself is made. The comparison may be made in real time and a kinematic correction may be calculated. The updated kinematic correction may be sent to the object to update the object position.

At step 710, the information from the integrated data streams from the sensors and the information from the object under observation are compared. In an exemplary embodiment, the comparison is used to determine an offset or positional discrepancy between the actual position of the object under observation and the intended position of the object under observation.

As illustrated herein, the method may include using the updated kinematic correction to reposition or update the positional information of the object under observation. Therefore, the object under observation may have a corrected position so that the actual position is closer to the desired position as intended by a user of the object. Other exemplary embodiments, may use the updated kinematic correction to avoid obstacles or collisions between objects by observing actual positions relative to programmed positions to avoid collisions when programmed positions deviate from actual positions.

At step 712, the method may include using the positional information to correct a position of the object under observation. The correction may be performed in any combination of manners. For example, the system may determine an offset to move the object from the actual position to the desired position accounting for the drift. The correction may be performed by calibrating the object under observation so that the controller of the object is updated to correct the intended position to the actual position. In an exemplary embodiment, the correction may be made in a subsequent path of a repeated action of the object under observation to adjust the path accounting for drift over time.

In an exemplary embodiment, the method may include providing positional information to an object controller to correct the location or positional instructions to the object.

Exemplary embodiments may comprise trackers positioned in an environment. The trackers may provide known locations within the environment in which the universal coordinate system may be determined. The trackers may be separate from the environment and positioned for coordinate calibration, and/or may be part of the environment such as being or included with one or more objects within the environment. Accordingly, the method may include providing the trackers in known locations within the environment. Determining coordinate information in one or more of the data streams using the tracker locations.

In an exemplary embodiment, the method may include data offsetting. In an exemplary embodiment, data may be offset to the point of interest on the object under observation, such as the TCP frame.

In an exemplary embodiment, the method may include receiving and synchronizing the positional data from the object under observation. For example, as illustrated the robot may provide information about its position to the system. The positional data from the object may be the location in which the machine is intended to be, but which may be imprecise or not accurate because of machine drift during use. The positional data from the object may therefore not be the actual position of the object under observation. The positional data from the object may be position of the object based on the information from or to the object for controlling its position without the benefit of the system and methods described herein. In other words, it may be the positional information as the machine intends the location to be, regardless of actual location of the object.

In an exemplary embodiment, the method may include comparing the positional data from the object with the positional data as determined by the one or more sensors. Exemplary embodiments may therefore compare the position in which the object under observation (such as the robot position) is intended to be based on the information from the robot itself and the actual, real world position of the robot that can include variations or deviations from the intended position (such as through machine drift). A deviation between the actual and intended position of the object under observation is therefore determined. In an exemplary embodiment, the deviation may be across seven degrees of freedom (7DoF).

In an exemplary embodiment, the method comprises data validation. The correction values may be validated based on set correction tolerances.

In an exemplary embodiment, the method may include determining a projected deviation for synchronization and real time correction to adjust a current position of the object under observation in real time. In an exemplary embodiment, the one or more data streams may be constructed from different data rates with different latencies. Exemplary embodiments may therefore create positional predictions in order to provide current instructions that can be executed and implemented to account for the latency from the positional calculation and correction of the positional implementation in time. Exemplary embodiments of a method described herein may comprise predicting a future kinematic correction of an object under observation. The predicted future kinematic correction may be used to control the object under observation at a future time so that by the time the instruction using the predicted future kinematic correction is actually implemented by the controller, the object under observation is being controlled at the future time so that the kinematic correction is synchronized to the implementation of the instruction providing the kinematic correction.

In an exemplary embodiment, the positional instructions may be sent to the robot controller to be implemented in a closed loop to provide real time positional compensation.

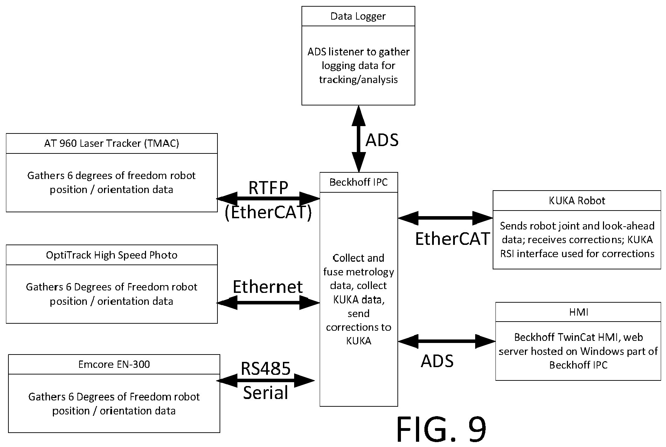

FIG. 9 illustrates an exemplary system configuration according to embodiments described herein. As illustrated, the system includes a processor outside of the system processing for fast receipt and analysis for real time positioning of the controlled device.

As illustrated in FIG. 9, the object to be controlled is a KUKA robot. The robot sends joint and look-ahead data as part of its control information. The robot may then receive corrections according to exemplary embodiments described herein. KUKA's robot sensor interface (RSI) may be used to implement the corrections received from the processor described herein. KUKA is an exemplary embodiment only and is representative of an object to be controlled according to embodiments described herein.

As illustrated, the system may include one or more sensors for obtaining positional information about one of the target objects for precision positional improvement. The system may include any combination of laser tracker(s), photogrammetr(y/ies), inertial measurement unit(s) (IMU), among others. Exemplary sensors may, for example, include AT960 laser tracker, OptiTrack high speed photogrammetry, Emcore EN-300 IMU. The one or more sensors may provide positional information, such as any or all of the six degrees of freedom positional information, from the sensors to the real time operating system.

In an exemplary embodiment, as illustrated, each sensor may be connected to the real time operating system. An exemplary real time operating system may be, for example, an industrial personal computer (IPC), such as Beckhoff IPC. Other operating systems may also be used, such as, for example, industrial personal computer or programmable logic controller (PLC). Exemplary embodiments of the real time operating system may receive the data from the sensors, fuse the received data, receive the positional information from the target object, determine corrections according to embodiments described herein, and send correction information to the target object for correcting the target object.

The sensors may, for example, communicate between the sensors to the operating system. The communication may be through any method available to the sensors. For example, wired and/or wireless communications. Exemplary embodiments may communicate between the sensor to the operating sensor may be over EtherCAT, Ethernet, serial, or other communication. As illustrated, the Leica laser tracker may communicate through a real time feature pack that communicates over EtherCAT.

Exemplary embodiments of the systems described herein may optionally include a data logger. The data logger may be configured to receive, gather, and save data from the one or more sensors. For example, the logger may store information from the raw sensor data, analysed data from the processor (operating system), or other data, information, or analysis.

Exemplary embodiments of the processor may be configured to perform the algorithms described herein for fusing the information from the sensors and determining positional corrections to the target object. For example, the data may be filtered or augmented so that positional information may be fused into complete data sets. Redundant data, such as positional information from different sources, may be integrated through statistical analysis in order obtained the desired level of precision. For example, the information may be averaged, weighted average, replaced, or otherwise combined. Sensors having a higher precision may take priority over other sensor data in obtaining a resulting positional determination. Integration of the data may be through Kalman filtering, or may include other sensor fusion technique. The algorithm executed by the processor may include comparing the integrated metrology data and the positional data from the target object in order to determine corrected positional information. The algorithm may optionally include projecting the corrected positional information into the future so that correction of the position of the target object would align with the execution and/or implementation of the instruction based on delays or processing times of the system.

Exemplary embodiments described herein may include concepts and applications for customized development or implementation of a Realtime Industrial Grade Global Metrology System for industrial manufacturing and robot cells. Exemplary embodiments described herein allows the observation of all or a desired set of target objects of interest in a given manufacturing cell with industrial grade precision. Exemplary embodiments described here may use information to improve the accuracy and precision of the assembly/manufacturing/inspection process.

In an exemplary embodiment to effectively saturate the area, the system herein may use multiple metrology sensors. This unique approach leverages advanced algorithms to fuse observations from all the sensors in the cell. This can include Laser Tracker data, High Speed Photogrammetry data, and the novel introduction of Inertial Dimensional Metrology data provided by precision Inertial Measurement Units. Additionally, metrology data from the machine and robotic devices within the cell can by fused into the solution.

In an exemplary optional embodiment, the resulting data may be used to initially calibrate all of the robots/machines in the cell and improve their accuracy. Calibration may begin with a series of poses to calculate parameters for an advanced kinematic model. Once calibrated, artificial intelligence algorithms with metrology feedback may be used to allow for kinematic model adjustment while in dynamic motion. Additionally, the metrology feedback may also be used for precision path corrections to nominal.

In an exemplary embodiment in which a cell may have multiple robots, each robot may be calibrated, and the paths can be synchronized with the common global metrology reference system. This allows for extremely precise collaboration between the parts and robots in the cell and higher precision throughout the working volume. Additionally or alternatively, part position can be constantly monitored and corrected. Dynamic adjustments to the assembly process can be applied in real time.

In an exemplary embodiment, since each of the operations performed in the cell have been observed by an industrial grade metrology system, the inspection process is intrinsic with the manufacturing process, potentially eliminating downstream or offline inspection.

The computing devices described herein are non-conventional systems at least because of the use of non-conventional component parts and/or the use of non-conventional algorithms, processes, and methods embodied, at least partially, in the programming instructions stored and/or executed by the computing devices. For example, exemplary embodiments may use configurations of and processes involving a unique system for real time enhanced positioning system as described herein, configurations of and processes involving a unique processes and algorithms for object detection, placement, feedback control looping, and positioning estimation for position accuracy and precision. Exemplary embodiments may be used for intrinsic and/or extrinsic calibration of robots that can be performed in real time. Exemplary embodiments of the systems and methods described herein may be used for robot or machine path correct for close tolerance functioning. Exemplary embodiments of a 7DoF Real-Time Enhanced Positioning system according to exemplary embodiments described herein may be used within a global metrology network to avoid collision and reduce failure incidence. Exemplary embodiments of the systems and methods described herein may be used for automation to improve quality. Exemplary embodiments of the systems and methods described herein may improve accuracy and/or precision of instrumentations that is not as costly with the precision and accuracy capabilities for desired automation activities. Exemplary embodiments of the systems and methods described herein may be used to measure part (or object) positions in a cell including multiple object detection, placement, and relative positioning within an environment. Parts and/or objects may be monitored through the cell environment simultaneously including monitoring multiple robot motions of a moving assembly line. Exemplary embodiments, of the system components may also provide unique attributes and/or technical benefits. For example, the use of the PLC processor may provide fast processing to reduce latency in calculations and permit faster responses and obtain real time processing. The algorithms described herein, may include, for example, a projection of positions to account for processing and machine operation so that the correction is aligned with the implementation by the machine. Integration of sensors information and the associated processing may improve accuracy, while the filtering may be used to improve data processing times and positional accuracy.

Exemplary embodiments described herein may be used in robotics, devices, drones, machinery, for real timing positioning and correction. Exemplary embodiments may be used with a combination of objects for applications such as global awareness, accurate and/or precise relative positioning, collision avoidance, etc. Exemplary embodiments may be used in an area for areal positioning, mapping, tracking, etc. Exemplary embodiments may have applications in machining environments, such as for manufacturing, machine tooling, agriculture, surveillance, etc.

Exemplary embodiments described herein may be used for a seven degree of freedom real time enhanced positioning system. Exemplary embodiments may use up to six degrees of spatial positioning. Up to three degrees of spatial positioning may be translational along three perpendicular axis in three dimensions: forward/backward-surge, up/down-heave, left/right-sway in three perpendicular axis. Up to three degrees of spatial positioning may be in orientation through rotation about the three perpendicular axis: rotation about the normal axis or up/down axis - yaw; rotation about the transverse axis or left/right axis - pitch; rotation about the longitudinal axis or forward/backward axis - roll. The last degree of freedom may be in time to permit real time assessment and correction of the position of the enhanced positioning system as described herein.

Exemplary embodiments described herein may use a degree of freedom in time. Exemplary embodiments described herein may use time in order to provide real time processing and update the system position in real time. As used herein, real time is understood to include receipt and processing of information continuously or in intervals that are sufficiently short to make positioning determinations and/or corrections to positioning determinations in sufficient time for the precision required for a given application without interfering with the continued use of the system in which the positioning is being determined. In other words, the machine, component, object, etc. that is being positioned does not need to be taken out of commission for calibration, but can be positioned during use. The positioning may also occur at a sufficient time so that the benefits of the positioning are commiserate with the requirements of the application. For example, if a machine has a drift over a few seconds of time, the exemplary embodiments of the system and method for position improvement described herein may operate on a range of one to a few sections, before the drift exceeds a tolerance threshold.

Exemplary embodiments of the systems and methods described herein may improve cost and reduce line of sight restrictions of current systems. Exemplary embodiments of the systems and methods described herein may also achieve greater angular and/or translational positional accuracy. Exemplary embodiments of the systems and methods described herein may achieve greater positional accuracy in a faster time (such as within or less than a second) as compared to conventional robotic position correction systems. Exemplary embodiments described herein may include a seven degree of freedom (7DoF) global metrology system than can monitor one or several components, objects, robots, etc. simultaneously to correct their path in real time.

Exemplary embodiments of system and methods provided herein may include fusion of sensor data in real-time for predictive machine path correction.

Exemplary embodiments described herein may use any combination of sensors to integrate multiple sensor data to create a global metrology system. Exemplary sensors may include any combination of inertial measurement units (IMUs), laser trackers, laser scanners, cameras, distance systems, probing sensors, accelerometers, robot encodes, etc.

Exemplary embodiments of the systems and methods described herein may include the intake of real-time device agnostic metrology data for machine agnostic predictive path correction. For example, the device agnostic metrology data may be based on the different sensors that can be used within the system. The device agnostic metrology data may be because the system and methods are configured to filter the data, extrapolate additional data points, transform the data, change a coordinate system of the data, change a data rate, synchronize the data, etc.

Exemplary embodiments of the systems and methods described herein may be used to provide a digital representation of a real world environment. The digital representation may be used for remote observation, for example.

Exemplary embodiments of the systems and methods described herein may be used for determining an actual object position of one or more objects within an environment for collision avoidance. Exemplary embodiments described herein may use forward path projections as described herein to provide control instructions to one or more objects within an environment to slow and/or start and/or start and/or speed up, change direction in order to avoid collisions.

Exemplary embodiments of the systems and methods described herein may be used for determining an actual object position over time and/or to project an actual object position into the future. Exemplary embodiments of such projections may be used for obstacle avoidance, position correction, vibration cancellation, etc.

Exemplary embodiments of the systems and methods described herein may include rolling calibration of machines by post processing metrology data to feed into a database for course correction based on a prior travel path of the machine. For example, a robot or machine may travel various paths over time, and the system or method may include creating databases of corrections corresponding to the given travel paths and/or time. Exemplary embodiments may include look up tables, databases, or corrections based on machine learning and prediction based on the database of path information and recorded offsets from actual positions. Exemplary embodiments may include providing predictive course correction based on prior paths performed by the machine. Exemplary embodiments may include predictive updates based on the calibration model, such as in building-up a lookup table as the machine moves.

Exemplary embodiments of the systems and methods described herein may include a platform infrastructure to accept j oint values into machine control layers, such as through a custom controller, in order to reduce or eliminate the use of original equipment manufacturer (OEM) kinematic modelling software such as Kuka RSI, Fanuc DPM, and ABB EGM. Exemplary embodiments of the system described herein may use an encryptor and/or interpreter to provide this functionality in the code. Exemplary embodiments described herein may therefore use the OEM controller since it may be agnostic to the software used by such controller. Alternatively, or in addition thereto, a custom controller may be used to control the object under observation, or may be integrated directly into the object to be controlled.

Exemplary embodiments of the systems and methods described herein include filtering the data streams using Kalman filtering in a PLC for real time processing. Exemplary embodiments bypass system processor(s) in order to increase the real time processing of the metrology data and provide real time correction while minimizing the lag time between the measurement and the correction.

Exemplary embodiments comprise systems and methods that are agnostic to communication protocols (industrial control languages), such as, for example, Profinet, EtherCAT, EtherNET, Profinet RT (Real-Time), etc.

Exemplary embodiments of the system described herein can be based in software and/or hardware. While some specific embodiments of the invention have been shown the invention is not to be limited to these embodiments. For example, most functions performed by electronic hardware components may be duplicated by software emulation. Thus, a software program written to accomplish those same functions may emulate the functionality of the hardware components in input-output circuitry. The invention is to be understood as not limited by the specific embodiments described herein, but only by scope of the appended claims.

As used herein, the terms "about," "substantially," or "approximately" for any numerical values, ranges, shapes, distances, relative relationships, etc. indicate a suitable dimensional tolerance that allows the part or collection of components to function for its intended purpose as described herein. Numerical ranges may also be provided herein. Unless otherwise indicated, each range is intended to include the endpoints, and any quantity within the provided range. Therefore, a range of 2-4, includes 2, 3, 4, and any subdivision between 2 and 4, such as 2.1, 2.01, and 2.001. The range also encompasses any combination of ranges, such that 2-4 includes 2-3 and 3-4.

Although embodiments of this invention have been fully described with reference to the accompanying drawings, it is to be noted that various changes and modifications will become apparent to those skilled in the art. Such changes and modifications are to be understood as being included within the scope of embodiments of this invention as defined by the appended claims. Specifically, exemplary components are described herein. Any combination of these components may be used in any combination. For example, any component, feature, step or part may be integrated, separated, sub-divided, removed, duplicated, added, or used in any combination and remain within the scope of the present disclosure. Embodiments are exemplary only, and provide an illustrative combination of features, but are not limited thereto.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

Also disclosed herein are the following numbered clauses:
1. A system, comprising:
   one or more sensors, each configured to generate a data stream to produce one or more data streams;
   one or more processors in communication with one or more memory having machine readable instructions stored thereon that when executed by the one or more processors are configured to:
      integrate the data streams into a single integrated data stream providing an actual positional data stream for the object under observation;
      receive an object positional data stream from an object under observation;
      compare the object positional data stream to the single integrated data stream to determine a kinematic offset between an actual position of the object under observation and a programmed position of the object under observation.
2. The system of clause 1, wherein the one or more processors in communication with one or more memory having machine readable instructions stored thereon that when executed by the one or more processors are further configured to: filter the data streams to integrate the data streams, extrapolate information from one or more data streams before integrating the data streams, synchronizing the data streams to integrate the data streams, determine expected offsets based on calculation and machine implementation latency, provide control instructions to the object under observation to account for the offset and reposition the object under observation from an actual position to an intended position, or any combination thereof.
3. The system of clause 1 or 2, wherein the one or more processors in communication with one or more memory having machine readable instructions stored thereon that when executed by the one or more processors are further configured to: provide a kinematic feedback loop to the object under observation to correct the actual position of the object under observation to provide for positional precision and accuracy of the object under observation in real time.
4. A method, comprising:
   providing one or more sensors configured to observe an object under observation;
   generating a data stream from each of the one or more sensors to generate one or more data streams;
   integrating the one or more data streams into a single integrated data stream providing an actual positional data stream for the object under observation;
   receiving an object positional data stream from the object under observation;
   comparing the object positional data stream to the single integrated data stream to determine a kinematic offset between an actual position of the object under observation and a programmed position of the object under observation.
5. The method of clause 4, further comprising providing a kinematic feedback loop to the object under observation to correct the actual position of the object under observation to be the programmed position of the object under observation to provide for positional precision and accuracy of the object under observation.
6. The method of clause 4 or 5, further comprising synchronizing the object positional data stream to the single integrated data stream, determining an expected offset by projecting the object positional data stream and/or the single integrated data stream and/or the comparison into a future time, using the expected offset in the kinematic feedback loop to correct the actual position of the object under observation so the expected offset aligns in time with an implementation of a control command to the object under observation using the expected offset, extrapolating data points within at least one of the one or more data streams, or filtering the one or more data streams, or a combination thereof.
7. The method of clause 6, wherein the filtering comprises using Kalman Filtering to produce the single integrated data stream.
8. The method of clause 6 or 7, wherein the generated one or more data streams are related to a position of the object under observation.
9. The method of any of clauses 6 to 8, wherein another sensor is positioned on at least one of the one or more sensors configured for observing the object under observation.
10. The method of any of clause 6 to 9, wherein the receipt, processing, comparison, and feedback loop are provided in real time to provide an updated kinematic correction to the object under observation to update an object position during use.
11. The method of any preceding clause, wherein the single integrated data stream and/or the object positional data stream are extrapolated to provide additional data points for comparison, filtered, synchronized, or some combination thereof before being compared.
12. The method of any preceding clause, wherein data streams are provided directly into one or more high speed PLC processors for processing and comparison with the object positional data stream.
13. The method of any preceding clause, wherein the one or more sensors comprises any combination of inertial measurement units (IMUs), laser trackers, laser scanners, cameras, distance systems, probing sensors, accelerometers, robot encoders.
14. The method of any preceding clause, further comprising using forward path projections based on the comparison to provide control instructions to one or more objects within an environment for positional correction.
15. The method of any preceding clause, further comprising rolling calibration of machines by post processing of the comparison to feed into a database for course correction based on a prior travel path of the object.

## Claims

1. A method, comprising:
providing one or more sensors configured to observe an object under observation;
generating a data stream from each of the one or more sensors to generate one or more data streams;
integrating the one or more data streams into a single integrated data stream providing an actual positional data stream for the object under observation;
receiving an object positional data stream from the object under observation;
comparing the object positional data stream to the single integrated data stream to determine a kinematic offset between an actual position of the object under observation and a programmed position of the object under observation.

2. The method of claim 1, further comprising providing a kinematic feedback loop to the object under observation to correct the actual position of the object under observation to be the programmed position of the object under observation to provide for positional precision and accuracy of the object under observation.

3. The method of claim 1 or 2, further comprising synchronizing the object positional data stream to the single integrated data stream, determining an expected offset by projecting the object positional data stream and/or the single integrated data stream and/or the comparison into a future time, using the expected offset in the kinematic feedback loop to correct the actual position of the object under observation so the expected offset aligns in time with an implementation of a control command to the object under observation using the expected offset, extrapolating data points within at least one of the one or more data streams, or filtering the one or more data streams, or a combination thereof.

4. The method of claim 3, wherein the filtering comprises using Kalman Filtering to produce the single integrated data stream.

5. The method of claim 3 or 4, wherein the generated one or more data streams are related to a position of the object under observation.

6. The method of any of claims 3 to 5, wherein another sensor is positioned on at least one of the one or more sensors configured for observing the object under observation.

7. The method of any of claims 3 to 6, wherein the receipt, processing, comparison, and feedback loop are provided in real time to provide an updated kinematic correction to the object under observation to update an object position during use.

8. The method of any preceding claim, wherein the single integrated data stream and/or the object positional data stream are extrapolated to provide additional data points for comparison, filtered, synchronized, or some combination thereof before being compared.

9. The method of any preceding claim, wherein data streams are provided directly into one or more high speed PLC processors for processing and comparison with the object positional data stream.

10. The method of any preceding claim, wherein the one or more sensors comprises any combination of inertial measurement units (IMUs), laser trackers, laser scanners, cameras, distance systems, probing sensors, accelerometers, robot encoders.

11. The method of any preceding claim, further comprising using forward path projections based on the comparison to provide control instructions to one or more objects within an environment for positional correction.

12. The method of any preceding claim, further comprising rolling calibration of machines by post processing of the comparison to feed into a database for course correction based on a prior travel path of the object.

13. The method of any preceding claim, further comprising:
filtering the data streams to integrate the data streams;
extrapolating information from one or more data streams before integrating the data streams;
synchronizing the data streams to integrate the data streams;
determining expected offsets based on calculation and machine implementation latency;
providing control instructions to the object under observation to account for the offset and reposition the object under observation from an actual position to an intended position;
or any combination thereof.

14. The method of any preceding claim, further comprising:
Providing a kinematic feedback loop to the object under observation to correct the actual position of the object under observation to provide for positional precision and accuracy of the object under observation in real time.

15. A system, comprising:
the one or more sensors of any preceding claim; and
one or more processors in communication with one or more memory having machine readable instructions stored thereon that, when executed by the one or more processors, are configured to perform the method of any preceding claim.
